**Europäisches Patentamt**

**European Patent Office**

**Office européen des brevets**

(19)

(11) Veröffentlichungsnummer : **0 336 402 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **G01N 21/47, G01N 21/53**

(21) Anmeldenummer : **89105995.8**

(22) Anmeldetag : **05.04.89**

(54) **Messeinrichtung in Form eines integrierenden Nephelometers zur Messung des Streu- und Absorptionskoeffizienten der Atmosphäre.**

(30) Priorität : **06.04.88 DE 3811475**

(43) Veröffentlichungstag der Anmeldung :
**11.10.89 Patentblatt 89/41**

(45) Bekanntmachung des Hinweises auf die Patenterteilung :
**21.10.92 Patentblatt 92/43**

(84) Benannte Vertragsstaaten :
**DE FR GB SE**

(56) Entgegenhaltungen :
**AT-B- 19 436**
**DE-A- 2 232 521**
**DE-A- 2 926 467**
**US-A- 4 118 625**
**APPLIED OPTICS, vol. 24, no. 23, 1. Dezember 1985 H. GERBER et al. "Infrared aerosol extiction from visible and near infraredlight scattering" Seite 4155-4166**

(56) Entgegenhaltungen :
**BEITRäGE ZUR PHYSIK DER ATMOSPHäRE, Band 37, Heft 3/4, 1964 G.H. RUPPERSBERG "Registrierung der Sichtweite mit demStreu-lichtschreiber" Seiten 252-263**
**JOURNAL OF SCIENTIFIC INSTRUMENTS AND OF PHYSICS IN INDUSTRY, vol. 26, 1949 BEUTTEL R.G. et al. "Instruments for theMe-asurement of the Visual Range" Seiten 357-359**

(73) Patentinhaber : **Deutsche Forschungsanstalt für Luft- und Raumfahrt**
**Linder Höhe Postfach 90 60 58**
**W-5000 Köln 90 (DE)**

(72) Erfinder : **von Redwitz, Heribert, Dipl.-Phys.**
**Ringstrasse 17**
**W-8130 Starnberg (DE)**

(74) Vertreter : **von Kirschbaum, Albrecht, Dipl.-Ing.**
**Hermann-Ehlers-Strasse 21a**
**W-8034 Germering (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Meßeinrichtung in Form eines integrierenden Nephelometers zur Messung des Streu- und Absorptionskoeffizienten der Atmosphäre wobei eine solche Meßeinrichtung nachstehend auch als Extinktiometer bezeichnet wird.

Ein Extinktionskoeffizient setzt sich zusammen aus der Summe eines spektralen Streukoeffizienten und eines Absorptionskoeffizienten, welche Koeffizienten wichtige Grundgrößen der Atmosphäre sind. Flugmessungen dieser mittels eines Extinktiometers bestimmten Grundgrößen, d.h. Messungen solcher Größen vom Flugzeug aus, sind von besonderer Bedeutung für die anthropogene und natürliche Belastung der Luft für Lidar-Messungen, für eine Strahlungsbilanz, für eine optische Dicke, Vereisung, Turbulenz, Sichtweite, Schrägsichtweite usw..

Herkömmliche Geräte arbeiten entweder wie Sichtweite- oder wie Streulicht-Meßgeräte und weisen im allgemeinen ein integrierendes Nephelometer auf. Transmissiometer benötigen eine dem Meßwert angepaßte Meßstreke. Streulichtmeßgeräte, in welchen die Streuung in der Atmosphäre über einen weiten Bereich von Winkellagen summiert wird, d.h. integrierende Nephelometer, sind seit langem bekannt.

So ist beispielsweise ein solcher Streulichtschreiber von G.H. Ruppersberg in einem Artikel "Registrierung der Sichtweite mit dem Streulichtschreiber" beschrieben, welcher als Sonderdruck aus "Beiträge zur Physik der Atmosphäre", 37, 3/4, 1964 Seiten 252 bis 263 bei der Akademischen Verlagsgesellschaft Frankfurt am Main, 1964 erschienen ist. Ein integrierendes Nephelometer ist von R.G. Beuttel und A.W. Brewer in "Instruments for the Measurement of the Visual Range" in "Journal Sci. Instrum. 26 (1949), Seiten 357 bis 359 sowie von R.J. Charlson, H. Horvath und R.F. Pueschel in "The Direct Measurement of Atmospheric Light Scattering Coefficient for Studies of Visibility and Pollution" Envir. Vol. 1, Seiten 469 bis 478 abgehandelt.

Mit diesen Geräten kann jedoch nur der Streukoeffizient, nicht aber der Extinktionskoeffizient gemessen werden, der beispielsweise für eine Sichtweitenbestimmung nach der Koschmieder Theorie exakt erforderlich ist, da sich die Absorption mit Hilfe dieser Geräte nicht bestimmen läßt.

Für spezielle Sondierungen der Atmosphäre sind flugtaugliche integrierende Nephelometer, d.h. an oder in Flugzeugen an-bzw. unterbringbare integrierende Nephelometer, erforderlich, welche das zu messende Aerosol möglichst wenig verändern; zu solchen Veränderungen kann es beispielsweise durch Aufheizen und/oder durch Turbulenz kommen; ferner kann es durch eine Strömung in gekrümmten Kanälen zu einer Verfälschung der Partikelgrößen-Verteilung kommen, wie es bei den auf dem Markt befindlichen Geräten oder bei modifizierten Forschungsgeräten der Fall ist.

Die bekannten flugtauglichen, integrierenden Nephelometer besitzen auch keine echte Kalibrierung während der Messung. Es wird zwar über einen weiten Bereich der Winkellagen gemessen, jedoch nicht unterhalb und oberhalb eines Winkels von 9° bzw. über 170°. Das Maximum für den Integranten der Bedingungsgleichung für die absolute Streufunktion, mit deren Hilfe der Streukoeffizient ermittelt werden kann, liegt für durchschnittlichen Streufunktionen bei etwa 10° bis 20°.

Der Erfindung liegt daher die Aufgabe zugrunde, eine Meßeinrichtung in Form eines integrierenden Nephelometers zur Messung bzw. zur simultanen Insitu-Bestimmung des spektralen Streu- und des Absorptionskoeffizienten bei variablen Wellenlängen, d.h. bei Wellenlängen zu schaffen, welche sukzessive oder alternierend oder aber auch automatisch verändert werden können. Ferner soll die durch die Erfindung geschaffene Meßeinrichtung einen weitgehendst ungestörten Durchfluß des zu messenden Aerosols ermöglichen und auch für kleinere Meßträger, wie beispielsweise für Flugzeuge geeignet sein. Gemäß der Erfindung ist dies bei einer Meßeinrichtung nach Anspruch 1 erreicht. Vorteilhafte Weiterbildungen der Erfindung sind Gegenstand der Unteransprüche.

Die erfindungsgemäße Meßeinrichtung in Form eines integrierenden Nephelometers zur Messung des Streu- und Absorptionskoeffizienten der Atmosphäre ist stationär, beweglich und von einem Flugzeug getragen, d.h. fluggetragen, einsetzbar. Im Unterschied zu Streulicht-Meßgeräten, welche seitwärts oder rückwärts einen auf ein Winkelintervall begrenzten Teil der Streufunktion messen, erfassen integrierende Nephelometer entsprechend der Formel

$$\sigma_s = 2\pi \int_0^\pi B(\varphi)\sin\varphi\, d\varphi \qquad (1)$$

die flächige Streufunktion B(φ) möglichst von nahe bei 0° bis 180°, wobei die nach den eingangs angeführten Veröffentlichungen realisierten Geräte von etwa 10° bis etwa 120° messen. Die bekannten Geräte messen so-

EP 0 336 402 B1

mit den Streukoeffizienten $\sigma_s$ direkt innerhalb eines gewissen Fehlers. Für nichtkugelförmiges Aerosol, wie beispielsweise Cirren, ist G1. (1) zu ersetzen durch

$$\sigma_s^* = \int_{\varphi=0}^{\pi} \int_{\theta=0}^{2\pi} \beta(\varphi,\theta)\sin\varphi\,d\varphi\,d\theta \qquad (2)$$

$$= 2 \int_{\varphi=0}^{\pi} \int_{\theta=0}^{\pi} \beta(\varphi,\theta)\sin\varphi\,d\varphi\,d\theta$$

Wird ein Azimutwinkel $\theta$ von 0 bis $\pi$ verwendet, was für räumlich nicht orientierte Partikel zulässig ist, ergibt sich der Faktor 2 vor dem Integral und der Raumwinkel w

$$w_\sigma = \int_{\varphi=0}^{\pi} \int_{\theta=0}^{\pi} \sin\varphi\,d\varphi\,d\theta = 2\pi \qquad (3)$$

repräsentiert exakt den Halbraum bzw. die Halbkugel.

Für den Absorptionskoeffizienten gilt entsprechendes bei einer anders gearteten Streufunktion $\beta_a$. Nur bei Messung der Strahlung aus dem Halbraum oder dem Vollraum unter Ausschaltung von Störstrahlung vom Hintergrund oder seitwärts wird somit der korrekte Streu- bzw. Absorptionskoeffizient erhalten. Ein noch größerer oder insbesondere ein kleinerer Raumwinkel führt zu einer fehlerhaften Bestimmung des Koeffizienten, auch wenn ein größerer Raumwinkel ein verbessertes Rausch/Signal-Verhältnis liefert.

Durch die erfindungsgemäße Meßeinrichtung in Form eines integrierenden Nephelometers ist die Messung des Streu- oder Absorptionskoeffizienten entsprechend G1. (2) und nachfolgenden Ausführungen verwirklicht. Hierbei wird der Halbraum, also der Raumwinkel $2\pi$ . sr über ein rotationssymmetrisches Ellipsoid erfaßt. Das Aerosol wird rechtwinklig zur Hauptachse exakt in einem Brennpunkt des Ellipsoids parallel beleuchtet. Die Streustrahlung in den Halbraum wird über die Ellipsoid-Kappe vom Haupt-Scheitelpunkt bis zur Begrenzung der zur Hauptachse senkrechten Sehne im Brennpunkt erfaßt und auf den zweiten Brennpunkt geworfen. Die Divergenz der ankommenden Licht- und Schallstrahlung läßt sich über die Ellipsoidparameter (a, b) beliebig gestalten.

Bei der Erfindung können die Wellenlängen variiert werden, und eine zeitliche und eine bei bewegtem Extinktiometer sich daraus ergebende räumliche Auflösung oder Wiederholungsrate sowie der Zeitpunkt bzw. eine Abfolge von Eichvorgang und Dunkelabgleich werden entweder automatisch oder von Hand während der Messung vorgenommen. Bei der Erfindung werden dann die einzelnen Meßwerte und Einstellparameter Kanälen zugeordnet, gespeichert sowie abgefragt und entweder direkt von einem Display abgelesen oder aber auf ein Magnetband aufgezeichnet.

Durch eine Weiterverarbeitung des spektralen Streu- und des Absorptionskoeffizienten mit Hilfe eines Rechners werden bei geeigneten Wellenlängen abgeleitete Größen erhalten, welche dann Aussagen über die Art sowie die Massenkonzentration des gemessenen Aerosols ermöglichen. Diese zeit- oder ortsabhängigen Profile werden vorzugsweise in Form von farbkodierten Bildern dargestellt, wodurch in einem anschaulichen Vergleich eine Beurteilung der gemessenen Luftmassen erleichtert ist.

Als Beispiel soll nachstehend die Darstellung eines Meßfluges bei konstanter Flughöhe durch eine Luftmasse erläutert werden. Die Meßwerte und die daraus abgeleiteten Größen, wie der Streu- und Absorptionskoeffizient bei verschiedenen Wellenlängen, die dazugehörige Konzentration, die Art des Meßaerosols usw., werden dann in Abhängigkeit von der Zeit bzw. der Ortes in waagrechten Streifen in jeweils verschiedenen Farbtönen aufgetragen. Hierbei wird der Betrag des Meßwertes bzw. der abgeleiteten Größen mit Hilfe der Farbsättigung kodiert. Vereinfacht läßt sich das Ganze auch in Grauwerten wiedergeben, wobei dann die Meßwerte am Ort der Ordinate anhand eines vorgegebenen Schlüssels wiederzuerkennen sind.

Mit der erfindungsgemäßen Meßeinrichtung kann unter Winkellagen von etwa 4° bis etwa 176° gemessen werden. Hierbei ist die Meßgenauigkeit dadurch gesteigert, daß sich das Meßsignal erhöht, wenn die Anteile

3

bei starker Vorwärtsstreuung d.h. also kleine Winkel bei einer Mie-Streuung, und auch bei einer Vorwärts- und einer Rückwärtsstreuung, also auch große Winkeln bei einer Rayleigh-Streuung, einbezogen werden und die Kalibrierung automatisch genügend oft vorgenommen wird; die Kalibrierung erfolgt mit Hilfe eines geeichten Streukörpers während der Messung, und der Eichwert soll hierbei ein bis zwei Zehnerpotenzen über dem maximal zu erwartenden Meßsignal liegen.

Bei einer ausreichend temperaturstabilisierten Lichtquelle und bei entsprechenden Detektoren reicht es dann aus, automatisch in der Dunkelphase während der Messung, falls Linearität vorausgesetzt werden kann, den zum Meßsignal additiven, simulierten Dunkel-Lichtimpuls sowie einen Schall- bzw. einen Infrarotimpuls zu messen. Bei dem erfindungsgemäßen Extinktiometer steuert dann ein Triggersignal eines gepulsten Lasers oder einer gepulsten Diode einen elektronischen Schalter allerdings nur während des Zeitintervalls auf Durchgang, während welchem das Signal des entsprechenden Detektors ankommt, wobei über ein elektronisches Zeitverzögerungsglied auch noch die Laufzeit des Schallimpulses berücksichtigt wird.

Für den sogenannten Nullimpuls, mittels welchem der Hintergrund-bzw. der Dunkelstrom gemessen wird, wird noch ein identisches Triggersignal über einen Zeitgeber simuliert. In der übrigen Zeit wird über einen Schalter eine Masseverbindung hergestellt, so daß nur die Impulse der Licht- und Schalldetektoren, nicht aber Störimpulse weiterverarbeitet werden. Beispielsweise wird der Gleichlichtanteil durch eine kapazitive Abnahme galvanisch von dem Meßssignal getrennt. Das endgültige Signal wird von dem Rauschanteil durch eine entsprechende Filterung selektiert, und danach wird dann noch der Anteil des Dunkelimpulses jeweils elektronisch von dem Signal subtrahiert.

Bei der Messung des spektralen Streu- und des Absorptionskoeffizienten ist zu beachten, daß bei Wechselwirkung mit Materie Absorption die Umwandlung von Strahlungsenergie in eine andere Energieform ist, während Streuung bei einer Wechselwirkung mit Materie oder bei einem Durchgang durch ein Medium die Ablenkung von gerichteter Strahlung nach verschiedenen Richtungen ist. Die Summe derjenigen Strahlung, die von einem Streuvolumen nach allen Richtungen geht, ist gleich der Schwächung der geradeaus verlaufenden Strahlung, bei welcher keine Absorption stattfindet. Hierbei gibt die absolute Volumenstreufunktion die Winkelverteilung der gestreuten Strahlungen gegenüber der Primärrichtung an; wenn diese Streufunktion mit einer Winkelfunktion gewichtet und über den Bereich einer Halbkugel integriert wird, führt diese Methode zu dem gesuchten Streukoeffizienten, der unsymmetrische räumliche Streufunktionen berücksichtigt.

Bei einer bekannten Anordnung wird das zu messende Streuvolumen mittels eines Strahlenbüschels, welches von einer außerhalb liegenden lichtpunktförmigen Quelle ausgeht, in einem weiten, jedoch nur den Halbkreis umfassenden Winkelbereich sinusförmig bestrahlt. Hierbei wird die Strahlungstärke der Streustrahlung aus diesem Winkelbereich in einer Richtung mittels einer Empfängeroptik, welche einen kleinen Öffnungswinkel hat, gegenüber einer schwarzen Lichtfalle erfaßt und gemessen. Die Streustrahlung in anderen Richtungen wird hierbei ausgespart. Eine Umkehrung des optischen Strahlenganges ergibt die andere Anordnung. Das zu messende Streuvolumen wird mit einem Strahlenbündel bestrahlt, wobei das Streuvolumen von einer außerhalb liegenden Empfängeroptik mit einem großen Öffnungswinkel längs des Strahlungsbündels in einem weiten, jedoch nur den Halbkreis einschließenden Winkelbereich erfaßt und gemessen wird. Wegen der Ausdehnung ist hierbei jedoch der "Blickwinkel" der Optik in Richtung auf eine schwarze Lichtfalle nur schwer zu bewerkstelligen. Beide Anordnungen sind nicht in der Lage unsymmetrische Streufunktionen zu berücksichtigen.

Aufgrund geometrischer Gegebenheiten ist bei beiden Ausführungsformen ein den Halbkreis umfassender Winkelbereich nicht zu realisieren. Entsprechend einem begrenzten Öffnungswinkel der Empfängeroptik wird nur ein Bruchteil der Strahlstärke der Streustrahlung der in alle Richtungen streuenden Aerosole oder Moleküle des Streuvolumens erfaßt und gemessen. So beträgt beispielsweise der Raumwinkel eines Objektivs mit einer relativen Öffnung von 1 : 2,8 nur 1,6% des Raumwinkels, welcher den Halbraum darstellt.

Jedes streuende Teilchen liefert hier einen Streuanteil nur innerhalb des Öffnungswinkels bzw. unter dem Winkel, aus dem er erscheint, und zwar fortlaufend nur für einen Streuwinkel entsprechend dem jeweiligen Streuwinkelumfang. Der Winkel der Streustrahlung hängt bei beiden Ausführungsformen der Erfindung vom jeweiligen Ort des Streuvolumens ab.

Bei der Ausführungsform der erfindungsgemäße Meßeinrichtung wird die Streustrahlung bzw. der bei der Absorption erzeugte Schallimpuls sowie die Infrarotstrahlung des Streuvolumens über nahezu den gesamten Halbraum zu etwa 95%, also auch unsymmetrische Streufunktionen, erfaßt, wobei der Winkel der Streu- und Infrarot- oder Schallstrahlung hierbei jedoch nicht von dem Ort des Streuvolumens abhängt. Aufgrund dieses Umstandes und wegen der n-fachen Bestrahlung des Meßvolumens kann das Streuvolumen hinsichtlich seiner Abmessung klein ausgelegt werden.

Nachfolgend wird die Erfindung anhand von bevorzugten Ausführungsformen unter Bezugnahme auf die anliegenden Zeichnungen im einzelnen erläutert. Es zeigen:

Fig. 1 teils in perspektivischer Darstellung, teils in Form einer Schnittansicht, schematisch eine bevorzugte Ausführungsform einer Meßeinrichtung gemäß der Erfindung;

Fig. 2 eine Schnittansicht einer vorteilhaften Weiterbildung des oberen Teils der Ausführungsform nach Fig. 1;

Fig.3 und 4 bevorzugte Ausführungsformen von Steuerwandlern für die erfindungsgemäße Meßeinrichtung nach Fig.1 und 2, und

Fig.5 bis 8 bevorzugte Ausführungsformen von echten Wandlern für die in Fig.1 und 2 wiedergegebenen Ausführungsformen der erfindungsgemäßen Meßeinrichtung.

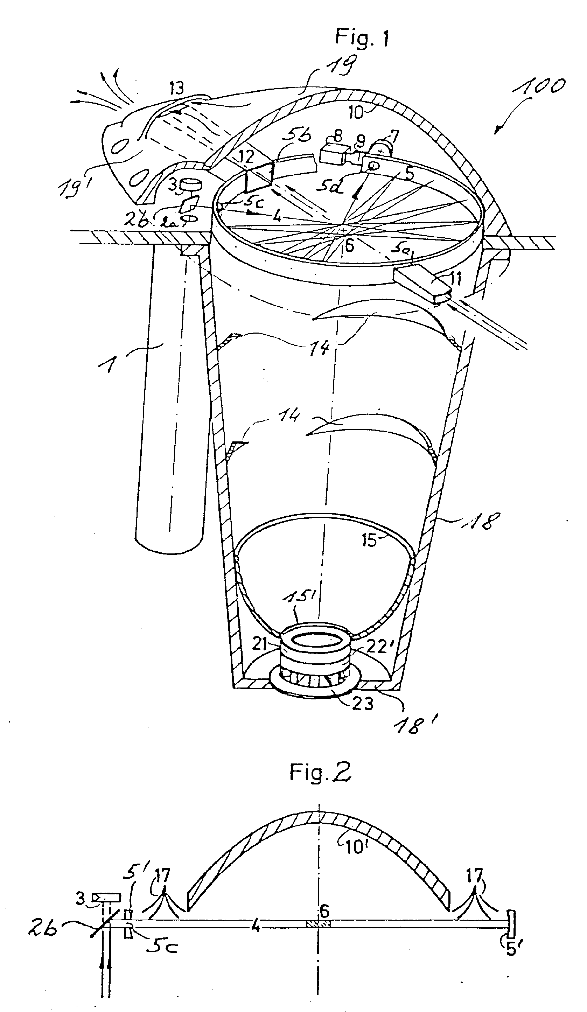

In Fig. 1 ist ein bevorzugte Ausführungsform eines in seiner Gesamtheit mit 100 bezeichneten Extinkiometers wiedergegeben, welches im oberen Teil der Fig.1 im wesentlichen perspektivisch und deren unteren Teil im wesentilchen als Schnittansicht dargestellt ist.

Am Boden 18′ eines kegelstumpfförmigen Gehäuses 18 des Extinktiometers 100 ist vorzugsweise ein Resonanzabsorber 23 befestigt, welcher beispielsweise eine Gummischicht, darunter ausgebildete zylindrische oder keilförmige Hohlräume und als Abschluß eine massive Metallplatte aufweist. Über dem Resonanzabsorber 23 ist ein Schalldetektor 22′ angebracht, welcher akustisch gut schalleitend mit einem Lichtdetektor 21 verbunden ist. Der Lichtdetektor 21 und der Schalldetektor 22′ sind hinsichtlich ihrer räumlichen Abmessungen so beschaffen, daß ein Schallimpuls im Schalldetektor 22′ eine Resonanz erzeugt.

Über dem Lichtdetektor 21 ist im Inneren des Gehäuses eine Hohlkugel 15 angeordnet, welche zum Lichtdetektor 21 hin eine Ausnehmung 15′ aufweist, und deren Innenfläche stark absorbierend ausgelegt ist, indem sie beispielsweise schwarz-matt-glatt-eloxiert ist und die zur Verminderung der Benetzung mit verschmutztem Wasser einen kleinen Adhäsionskoeffizienten aufweist. Gegenüber der Ausnehmung 15′ geht die Hohlkugel 15 in das als gerader Kegelstumpf ausgebildete, Gehäuse 18 über, dessen innere Oberfläche ebenfalls stark absorbierend ausgeführt, beispielsweise wieder schwarz-matt-glatt-eloxiert, ist und das auch wieder zur Verminderung der Benetzung mit verschmutztem Wasser einen kleinen Adhäsionskoeffizienten aufweist.

Wie schematisch in Fig.1 angedeutet ist, stehen von der Innenwandung des Gehäuses 18 sich nach innen verjüngende, sichelartige, etwa halbkreisförmige Leitschaufeln 14 vor, welche ihre größte Ausladung rechtwinklig zu einer strichpunktiert angedeuteten Mittenachse aufweisen, und deren Funktion später noch näher beschrieben wird.

Am in Fig.1 oberen Ende des kegelstumpfförmigen Gehäuses 18 ist ein vorzugsweise kreiszylinderförmiger Ringspiegel 5 geringer Höhe angeordnet, über welchem ein aufgeschnitten und perspektivisch wiedergegebener Teil eines rotationssymmetrischen Ellipsoidspiegels 10 angeordnet ist. Hierbei ist der über dem Ringspiegel 5 angebrachte Ellipsoidspiegel 10 so bemessen, daß sein erster, in Fig.1 oberer Brennpunkt 6 im Mittelpunkt der Mittenebene des kreissymmetrischen Ringspiegels 5 liegt, während dessen zweiter Brennpunkt inmitten und auf dem Lichtdetektor 21 und über dem Schalldetektor 22′ liegt.

In dem kreiszylinderförmigen Ringspiegel 5 sind diametral einander gegenüberliegend eine Einlaßöffnung 5a und eine Auslaßöffnung 5b vorgesehen. An der Einlaßöffnung 5a ist eine von dem Ringspiegel 5 nach außen vorstehende Einlaßdüse 11 vorgesehen, die innen schwarz ist und sich zum Ringspiegel 5 hin konisch erweitert. An der diametral gegenüberliegenden Auslaßöffnung 5b ist eine ebenfalls vom Ringspiegel 5 nach außen vorstehende Auslaßdüse 12 angebracht, die ebenfalls innen schwarz ausgeführt ist, jedoch nach außen hin, d.h. vom Ringspiegel 5 weg konisch zunimmt.

In Fortsetzung der Auslaßdüse 12 geht eine der Form des Ellipsoidsspiegels 10 folgender und damit windschlüpfrig ausgebildeter, oberer Gehäuseteil 19 in einen flach auslaufenden Teil 19′ über, über welchem eine in Draufsicht bügelartige Haube 13 ausgebildet ist, die nach hinten offen ist, wie in Fig.1 durch mehrere divergierend verlaufende Pfeile angedeutet ist.

Ferner sind in dem Ringspiegel 5 noch eine Lochblende 5c sowie eine Austrittsöffnung 5d ausgebildet. In radialer Richtung des Ringspiegels 5 ist hinter der Austrittsöffnung 5c ein optischer Detektor 7 mit einer nicht näher dargestellten Lochblende vorgesehen, deren Durchmesser kleiner als die Austrittsöffnung 5d ist. Zwischen der Austrittsöffnung 5d im Ringspiegel 5 und dem Detektor 7 ist ein Eichnormal 9 vorgesehen, das einen im folgenden näher beschriebenen, optischen und akustischen Streukörper als Reflektor aufweist, und mittels eines Hubmagneten 8 genau hinter die Austrittsöffnung 5d positionierbar ist.

In radial Richtung ist hinter der Lochblende 5c außerhalb des Ringspiegels 5 ferner ein Strahlteiler 2b angeordnet, welcher eine geringe Transmission, jedoch eine hohe Reflexion besitzt. In Fig.1 sind oberhalb des Strahlteilers 2b ein optischer Detektor 3 und unterhalb des Strahlteilers 2b eine Lochblende 2a vorgesehen. Unter der Lochblende 2a ist in Fig.1 schematisch ein gepulster oder modulierter Laser 1, ein abstimmbarer Laser oder eine abstimmbare Laserdiode dargestellt, die als Lichtquelle eines Lichtsenders dienen; dem Laser bzw. der Laserdiode 1 sind bekannte Einrichtungen zum Durchstimmen oder Frequenzverdoppeln oder auch Einrichtungen für diskontinuierlich einstellbare Frequenzintervalle von diskreten Frequenzen zugeordnet.

Eine beispielsweise von dem gepulsten oder modulierten Laser 1 abgegebene Strahlung genügend kleiner Divergenz gelangt über den Strahlteiler 2b und die Einlaßöffnung 5c in den kreiszylinderförmigen Ringspiegel

EP 0 336 402 B1

5, in welchem sie mehrmals reflektiert wird, wobei sich die einzelnen Teilstrahlen 4 konzentrisch um den oberen Brennpunkt 6 des Ellipsoidspiegels 10 schneiden. Über diesen Brennpunkt 6 werden in Richtung von der Einlaßdüse 11 zur Auslaßdüse 12 ein zu messendes Aerosol bzw. ein extingierendes Gas u.ä. geleitet.

Bei einer Messung wird Streulicht, das aus dem Bereich des oberen Brennpunkts 6 stammt, d.h. von einem Meßvolumen ausgeht, das im Brennpunkt bzw. Kreuzfleck der gefalteten Teilstrahlen 4 liegt, zum zweiten Brennpunkt des Ellipsoidspiegels 10 reflektiert, bzw. wird der bei einer Absorption erzeugte Schallimpuls sowie gegebenenfalls eine Infrarotstrahlung über den Ellipsoidspiegel 10, d.h. fast den gesamten Halbraum ebenfalls zum zweiten Brennpunkt des Ellipsoids reflektiert. Die in dem Streulicht enthaltene Energie wird dann direkt von dem Lichtdetektor 21 gemessen.

Zur Messung des absorbierten und damit umgewandelten Strahlungsanteils werden im Hinblick auf die jeweilige Anwendung später noch verschiedene Ausführungsformen angegeben. Hierbei kann die Messung der Absorption als ein thermoakustischer Vorgang aufgefaßt werden, welcher auf einer optischen Anregung und Absorption beruht, und auf welchen dann eine optische oder akustische Detektion erfolgt.

An dem Strahlteiler 2b, der eine geringe Transmission, jedoch eine hohe Reflexion aufweist, wird die von dem Laser 1 abgegebene Strahlung so aufgeteilt, daß ein Teil von dem hinter dem Strahlteiler 2b andgeordneten Detektor 3 gemessen wird, während der andere Teil, wie vorstehend beschrieben, durch die Eintrittsöffnung 5c in den Ringspiegel 5 eintritt. Nach n Reflexionen am Ringspiegel tritt der Strahl am Ende seines Wegs durch die Austrittsöffnung 5d im Ringspiegel 5 aus diesem aus und gelangt dadurch auf den zur Strahlachse unter einem entsprechenden Winkel angeordneten Detektor 7, wodurch die am Detektor 7 unvermeidliche Reflexionsstrahausscheidet.

Das heißt, bei der in Fig.1 dargestellten Ausführungsform des erfindungsgemäßen Extinktiometers wird somit keine gerichtete Strahlung direkt über den Ellipsoidspiegel 10 reflektiert. Außerdem ist dann dieses System in sich äußerst vibrationsarm aufgebaut und insgesamt gedämpft gelagert.

Im Falle einer Eichung, die automatisch mit Hilfe eines Zeitgebers durchführbar ist, und/oder auch von Hand vorgenommen werden kann, trifft der letzte Teilstrahl 4 der ankommenden gepulsten oder modulierten Strahlung nach dem Durchgang durch die Austrittsöffnung 5d auf das Eichnormal 9 auf, das durch den Hubmagneten 8 vor den Detektor 7 geschoben ist. Durch den letzten Teilstrahl 4 wird am Eichnormal 9 ein definiertes, simmuliertes, keulenförmiges Streulicht erzeugt, und infolge einer Absorption wird ein Schallimpuls bzw. ein thermisches Signal über den Ellipsoidspiegel 10 zum Lichtdetektor 21 oder zum Schalldetektor 22′ oder auch zu einem Infrarotdetektor reflektiert; hierbei entspricht die Reflexion einer in etwa Lambert'schen Energieverteilung. Ferner kann die Abmessung und die Form des Eichnormals 9 so gewählt sein, daß für die akustische Erregung Resonanz herrscht.

Das Eichnormal 9 kann auch im sogenannten Durchlichtverfahren als transparente Streu- oder Absorberscheibe vor der Austrittsöffnung 5c angeordnet sein. Ferner kann das Eichnormal 9 bei Anwenden des sogenannten Auflichtverfahrens unter 45° Neigung zum ersten Teilstrahl 4 als Reflektor vor der Austrittsöffnung 5c angeordnet sein, so daß es direkt zu den Detektoren 21 und 22 hin weist.

Beispielsweise kann bei Anwendung des Durchlichtverfahrens das Eichnormal die Form einer Hohlkugel mit jeweils einer Öffnung für den ankommenden Lichtimpuls und den abgebenden Licht- und akustischen Impuls aufweisen. Bei Anwendung des Auflichtverfahrens kann für eine Ultraschallresonanz beispielsweise eine wabenförmige Anordnung von kleinen Hohlhalbkugeln angewendet werden.

In Fig.2 ist im Schnitt eine vorteilhafte Weiterbildung des oberen Teils der in Fig.1 wiedergegebenen Ausführungsform des erfindungsgemäßen Extinktiometers dargestellt. Im Unterschied zu der Ausführungsform nach Fig.1 weist ein Ringspiegel 5′ eine gewölbte Innenfläche auf, wobei deren Krümmung symmetrisch zu der Ringspiegel-Mittenfläche etwa in der Größenordnung des Ringspiegel-Durchmessers liegt. Ferner weist der obere Teil eines Ellipsoidspiegels 10′, wie aus Fig.2 zu ersehen ist, im Bereich einer gedachten Berührungslinie des Ellipsoidspiegels 10′ mit dem Ringspiegel 5′ einen kleineren Durchmesser als dieser auf. Dadurch sind an der gedachten Ringspiegel-Mittenfläche gegenüberliegenden Kanten des Ellipsiodspiegels 10′ sogenannte Doppel-Lichtfallenblenden 17 ausgebildet. Durch das Vorsehen dieser Doppel-Lichtfallenblenden 17 ist verhindert, daß eine diffus vom Ringspiegel 5′ kommende Störstrahlung über den Ellipsoidspiegel 10′ beispielsweise zum Lichtdetektor 21 reflektiert wird.

Der Ringspiegel 5′, welcher die parallele, vom Laser 1 stammende Strahlung "faltet", reflektiert diese Strahlung aufgrund unvermeidbarer Fehler und einer ebenso unvermeidbaren Verschmutzung auch einem gewissen Grad zu der Doppel-Lichtfallenblende 17, welche vorzugsweise hornförmig gestaltet ist und dadurch die Störstrahlung in sich zur Spitze hin zunehmend absorbiert. Es gelangt also, wie bereits erwähnt, keine Störstrahlung auf den Ellipsoidspiegel 10′. Irgendwelche Störstrahlung in anderer Richtung wird über die im Inneren des Gehäuses 18 angebrachten Leitschaufeln, über das Gehäuseinnere selbst sowie über die am unteren Ende des Gehäuses 18 angeordnete Halbkugel 15 absorbiert.

Die erwähnten Doppel-Lichtfallen 17 sind jeweils so vor und hinter jedem Teilstrahl 4 angeordnet, daß die

6

Teilstrahlen 4 die Kante gerade noch nicht streifen. Nach einer ausreichend großen Anzahl von n Reflexionen am Ringspiegel 5' tritt der Teilstrahl im Ringspiegel 5' schließlich durch die Lochblende 5d aus diesem aus und wird mittels des Detektors 7 gemessen. Da die optische Achse des Detektors 7 bezüglich des letzten Teilstrahls 4 unter einem kleinen Winkel angeordnet ist, wird das vom Detektor 7 reflektierte Licht in einer einfachen, nicht näher dargestellten, Lichtfalle absorbiert.

Aus den Meßsignalen des Detektors 21 und dem geometrischen Mittel aus den Signalen der Detektoren 3 und 7 wird mit Hilfe beispielsweise eines Multifunktions-Konverters der Quotient gebildet, welcher gewichtet den spektralen Streukoeffizienten darstellt; dieser Wert wird zusammen mit der Angabe der benutzten Wellenlänge des Senders direkt am Gerät angezeigt. Diese Werte stehen dann für eine Fernanzeige oder auch zur Darstellung mittels eines Plotters, und auch die Ursprungswerte für eine Weiterverarbeitung per Rechner und eine anschließende Speicherung beispielsweise auf Band zur Verfügung.

Ferner wird mittels der Ausgangssignals des Detektors 7 der Betriebszustand der erfindungsgemäßen Meßeinrichtung angezeigt, und zwar dadurch, daß aufgrund der spektralen Empfindlichkeit des Detektors dieser einen Wert anzeigt, welcher der eingestellten Wellenlänge des Lichtsenders entspricht; dieser Ist-Wert, der mit dem Soll-Wert oder auch mit einem konstanten Quotienten auf den Meßwerten der Detektoren 3 und 7 verglichen wird, ergibt eine Aussage über den störungsfreien Betrieb.

Andererseits wird bei einem Eichvorgang, sobald der Hubmagnet 8 unter Strom steht, ein Signal Null bzw. der Rauschwert des Detektors 7 über ein Display direkt angezeigt und steht gleichzeitig für eine Fernanzeige und Weiterverarbeitung (Eichung!) zur Verfügung.

Ferner wird bei der erfindungsgemäßen Meßeinrichtung 100 die Schallstärke eines Schallimpulses, welche bei der Absorption der Lichtstrahlen des Senders, im Aerosol erzeugt wird, von dem Brennpunkt 6 aus innerhalb des Raumwinkels des Ellipsoidspiegels 10, welcher nahezu den Halbraum präsentiert, zu dessen zweiten Brennpunkt reflektiert; die im zweiten Brennpunkt eintreffende Energie wird direkt über akustische Detektoren 22' weitergeleitet oder indirekt mittels optischer Verfahren gemessen. Hierbei kann vorher mittels einer Vorrichtung die akustische von der optischen Strahlung getrennt werden. Der Absorptionskoeffizient kann analog zu der vorher beschriebenen Methode gebildet und aufgezeichnet werden.

Außerdem wird erfindungsgemäß die Verbreiterung des Impulses beispielsweise im empfangenen Detektor 22' gegenüber dem Sendeimpuls im Detektor 3 oder 7 als Quotient aufgezeigt; genauer gesagt, wird die zeitliche Auflösung desselben aufgezeichnet; zum Zwecke der Aussage bzw. der Anzeige bezüglich zu- oder abnehmender gemittelter Radien des absorbierenden Aerosols kann die zu- oder abnehmende Verbreiterung auch aufgezeichnet bzw. angezeigt werden. Hierbei wird die Partikel-Größenverteilung, bezogen auf die Absorption, über die Änderung im Durchfluß des Meßgases oder aber anhand einer Änderung der Impulsdauer entsprechend ermittelt.

Ein Korrekturfaktor, welcher für die Bestimmung des Streukoeffizienten notwendig ist, ist hierbei von dem Defizitwinkel, d.h. dem fehlenden Winkel zu 0° sowie zu 180°, welcher den Halbraum umfaßt, und von der absoluten Volumenstreufunktion oder einer Partikelgrößen-Verteilung des gerade vorhandenen Aerosols oder Gases abhängig. Die relative Abweichung des Korrekturfaktors der herkömmlichen Nephelometer liegen hierbei in der Größenordnung vn ± 10% des mittleren Wertes. Um diesen systematischen Fehler klein zu halten, ist bei dem erfindungsgemäßen Gerät der erwähnte Defizitwinkel durch konstruktive Maßnahmen klein gehalten. Durch die Verwendung verschiedener Korrekturfaktoren für Intervalle des MeßwerteUmfangs oder durch die Korrektur als Funktion des Meßwertes läßt sich mit Hilfe zusätzlicher Rechenoperationen die Relativabweichung des Korrekturfaktors verringern.

Bei der erfindungsgemäßen Meßvorrichtung ergibt sich aufgrund der Bestimmung des Streu- oder Absorptionskoeffizienten über den Quotienten des Signals vom Detektor 21 oder 22' und über den geometrischen Mittelwert der Signals von den Detektoren 3 und 7 ein zweiter Korrekturfaktor, welcher von der Geometrie der Optik sowie von der Zahl der Reflexionen n am Ringspiegel 5 bzw. 5' abhängt und hierbei so vorteilhaft ohne Rechenoperationen gestaltet werden kann, daß der systematische Fehler des Quotienten dieser beiden Korrekturfaktoren, nämlich den aus Defizitwinkel und Reflexionszahl gewonnenen Korrekturfaktoren, über einen weiten Bereich des Meßwerteumfangs ein Minimum des systematischen Fehlers annimmt und eine hohe Genauigkeit der Meßwerte ergibt.

Bei Verwendung der erfindungsgemäßen Meßeinrichtung werden somit der Streu- und der Absorptionskoeffizient als Funktion der Signale der linearen Detektoren 3, 7 und 21 bzw. 22' sowie einer Gerätekonstanten erhalten. Zur Überprüfung und Ergänzung bei großen Extinktionskoeffizienten dient zusätzlich der als Transmissiometer aufzufassende Bereich, welcher die Transmission über den gefalteten Strahlengang des Ringspiegels 5 mit Hilfe der Detektoren 3 und 7 zu messen erlaubt. Hierbei ist allerdings der Reflexionsgrad des Ringspiegels 5 vorher zu bestimmen.

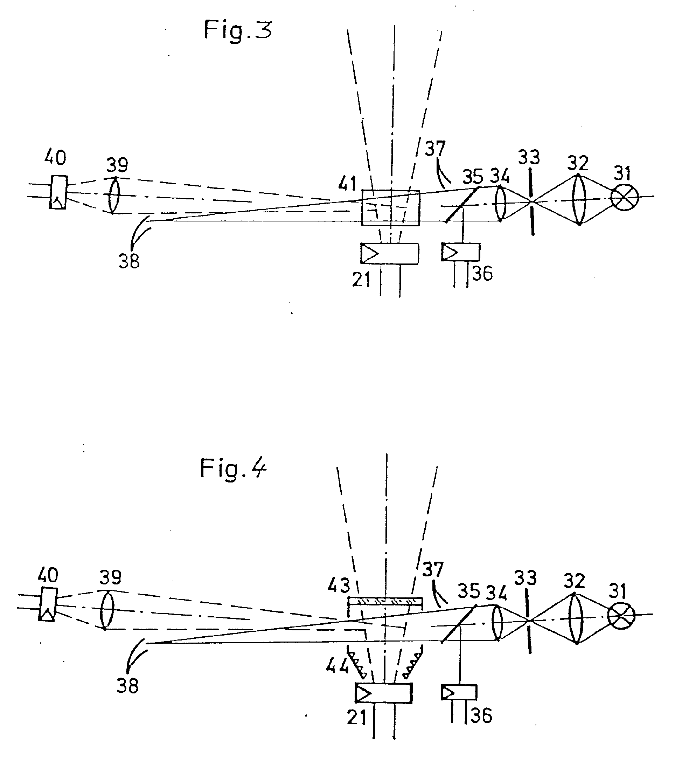

In Fig. 3 und 4 sind bevorzugte Steuerwandler dargestellt, mit welchen bezogen auf das Eingangssignal ein viel größeres Ausgangssignal erzeugt werden kann, und bei welchen eine Rückkopplung vom Ausgangssignal zum Eingangssignal oder zum Meßsignal möglich ist, wenn ersteres auf letzteres transformiert wird.

In Fig. 3 ist in dem anderen Brennpunkt des Ellipsoidspiegels 10 anstelle des Detektors 22′ in Fig. 1 ein lichtdurchlässiger, akustischer Resonanzkörper 41 angeordnet, welcher vorzugsweise mit einer Flüssigkeit oder einer Dispersion gefüllt ist; dieser Resonanzkörper 41, beispielsweise eines Debye-Sears-Typs wird bei Auftreffen eines Schallimpulses in Resonanz versetzt.

Etwa senkrecht zu der Mittenachse eines vom Schallimpuls gebildeten Kegels sind in Fig.3 hintereinander in der Lichtausbreitungsrichtung eine monochromatische Lichtquelle 31, beispielsweise eine Lichtdiode, eine Kondensorlinse 32, welche die Lichtquelle auf einen Spalt 33 abbildet, sowie ein Objektiv 34 vorgesehen. Das Objektiv 34 bildet den Spalt 33 über einen nachgeordneten Strahlteiler 35 und den lichtdurchlässigen, akustischen Resonanzkörper 41 bei der Ausführungsform nach Fig.3 bzw. über ein Resonanzgehäuse 43 in Form beispielsweise eines Schlierengehäuses bei der Ausführungsform in Fig.4 auf eine auf der anderen Seite des Resonanzkörpers 41 bzw. des Resonanzgehäuses 43 vorgesehene Lichtfallenblende 38 ab; die Lichtfallenblende ist in der Hauptachse des Objektivs 34 angeordnet.

In Fig.3 bzw. 4 ist unter dem Strahlteiler 35 jeweils ein optischer Detektor 36 angeordnet, welcher ständig die Strahlstärke der Lichtquelle 31 und damit deren Konstanz mißt. Oberhalb des Strahlteilers ist ferner eine weitere Lichtfallenblende 37 vorgesehen, welche so justiert ist, daß kein direktes Licht einen weiteren Lichtdetektor 40 erreicht, vor welchem eine Sammellinse 39 so angeordnet ist, daß die erwähnte Objektiv-Hauptachse und die Sammellinsen-Hauptachse einen sehr kleinen Winkel miteinander einschließen.

Durch die Sammellinse 39 wird bei der Ausführungsform nach Fig.3 die Mitte des akustischen Resonanzkörpers 41 und bei der Ausführungsform nach Fig.4 das Resonanzgehäuse 44 auf den Lichtdetektor 40 abgebildet. In den beiden Ausführungsformen nach Fig.3 und 4 ist der Abstand zwischen dem Resonanzkörper 41 bzw. dem Resonanzgehäuse 44 wesentlich größer als der Abstand zu dem Objektiv 34.

In der Ausführungsform nach Fig.4 ist das Resonanzgehäuse 44, damit in ihm Gase oder Flüssigkeiten untergebracht werden können, in der Normalrichtung zum Objektiv 34 und auf der anderen Seite in Richtung zur Sammellinse 39 mit seitlichen Fenstern versehen; auf der dem Lichtdetektor 21 abgewandten Seite ist an dem Resonanzgehäuse 44 eine dünne, lichtdurchlässige Abdeckplatte 43 vorgesehen, deren Abstand zu diesem Lichtdetektor 21 beispielsweise über ein nicht näher dargestelltes Feingewinde genau justiert und eingestellt werden kann.

Wird nunmehr aus dem Bereich des Brennpunkts 6 wobei dieser Bereich auch als Meßvolumen bezeichnet werden kann, über den Ellipsoidspiegel 10 Streustrahlung reflektiert, so gelangt diese durch den lichtdurchlässigen Resonanzkörper 41 bzw. über die lichtdurchlässige Abdeckplatte 43 und das Resonanzgehäuse 44 zum Lichtdetektor 21. Ein akustischer Impuls, der in dem Meßvolumen im Bereich des Brennpunkts 6 bei Absorption einer beispielsweise von einem Laser 1 abgegebenen Strahlung erzeugt worden ist, gelangt dann ebenfalls zu dem akustischen Resonanzkörper 41 (siehe Fig.3) und bewirkt hier eine periodische Dichteänderung und eine Änderung des Brechungsindex ähnlich wie bei einem optischen Brechungsgitter. Hierdurch wird dann das von der Lichtquelle 31 abgegebene Licht entsprechend gebeugt und von dem Lichtdetektor 40 gemessen.

Bei der Ausführungsform nach Fig.4 tritt in dem Resonanzgehäuse 44, welches beispielsweise als Schlierengehäuse ausgeführt sein kann, aufgrund der Dichteänderung in Verbindung mit einem sehr flachen Einfall des Lichts von der Lichtquelle 31, eine Ablenkung dieser Lichtstrahlung ein, die insbesondere dann, wenn als Sammellinse 31 ein langbrennweitiges Fernrohrobjektiv verwendet ist, als Maß für die Absorption entsprechend gute Signale am Lichtdetektor 40 liefert.

Ferner kann auch beispielsweise ein nicht näher dargestelltes modifiziertes Interferometer des Typs Fabry/Perot vorgesehen sein; hierbei wird dann eine obere Glasplatte vom Schallimpuls in Resonanzversetzt, während eine untere Glasplatte starr bleibt. Durch die Schwingung der oberen Glasplatte wird dann eine Änderung der Gangdifferenz und damit eine Änderung der Interferenzstreifen hervorgerufen.

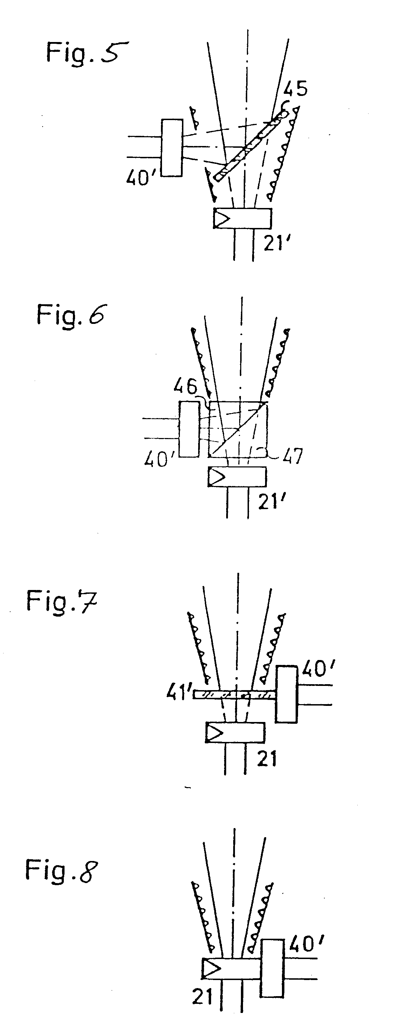

In den Fig.5 bis 8 sind entsprechend der Ausführungsform in Fig.1 noch weitere sogenannte echte Wandler wiedergegeben. Bei der Ausführungsform der Fig.5 ist über dem am Gehäuseboden 18′ mittelbar gehalterten einem Detektor 21′ eine unter 45° zur Strahlungsmittenachse ausgerichtete, optisch akustische Strahlteilerplatte 45 vorgesehen, welche die senkrecht zum Detektor 21′ einfallende optische und akustische Strahlung sowohl auf den Detektor 21′ als auch auf den Detektor 40′ aufteilt. Mit der Ausführungsform nach Fig.5 können dann zwei unterschiedliche Meßverfahren durchgeführt werden.

In dem einen Fall wird durch die optisch-akustische Strahlteilerplatte 45 die ankommende Streustrahlung von einer ankommenden, durch Absorption erzeugten Schallwelle oder Infrarotstrahlung getrennt; hierbei wird dann entweder die Lichtstrahlung reflektiert und mit dem Detektor 40′, welcher dann ein Lichtdetektor ist, bestimmt, und die durchgehende Streustrahlung in Form einer Schallwelle oder Infrarotstrahlung wird mit dem Detektor 21 gemessen, welcher dann ein Schall- oder Infrarotdetektor ist, oder umgekehrt. Im ersten Fall ist der Schallwellen-Widerstand der Strahlteilerplatte 45 niedrig zu halten, was beispielsweise mit einer verspiegelten, dünnen und leichten Kunststoffplatte unter Ausnützung des Koinzidenzeffektes erreichbar ist.

Bei dem anderen Fall wird durch die opto-akustische Strahlteilerplatte 45 analog dem vorstehend beschriebenen Fall die Streustrahlung von dem bei der Absorption erzeugten Schallimpuls getrennt. Hierbei ist die Strahlteilerplatte 45 entsprechend der Schallwellenlänge im Hinblick auf die Eindringtiefe von Schallwellen zur Vermeidung einer Teilreflexion mit einer ausreichenden akustischen Dicke zu wählen. Als Strahlteilerplatte 45 kann dann beispielsweise eine Platte aus einer entspiegelten, schweren Glassorte verwendet werden.

In der Ausführungsform der Fig.6 wird statt mit der Strahlteilerplatte 45 die akustische von der optischen Strahlung mit Hilfe eines optisch-akustischen Strahlteilerwürfels getrennt, welcher aus einem oberen Strahlteilerprisma 46 und aus einem unteren Strahlteilerprisma 47 gebildet ist. Die optisch-akustische Strahlung trifft hierbei in etwa senkrecht auf das obere Prisma 46 auf und tritt aus dem unteren Prisma 47 aus. Analog zu der Ausführungsform nach Fig.5 sind auch hier wieder durch eine entsprechende Auswahl des Materials für das obere Prisma 46 bzw. für das untere Prisma 47 zwei Möglichkeiten gegeben, wobei bezüglich der Oberfläche jeweils von einem etwa senkrechten Eintritt bzw. Austritt ausgegangen wird.

Für eine durchgehende optische Strahlung sind die Brechungszahlen der beiden Prismen 47 und 46 gleich, während der Wellenwiderstand der beiden Prismen 47 und 46 für die akustische Strahlung so unterschiedlich sind, daß am unteren Prisma 47, das ein akustisch dünneres Medium aufweist, für die akustische Welle Totalreflexion eintritt. Bei Vertauschung der Strahlungen ist der Wellenwiderstand der beiden Prismen 45 und 46 für die akustische Strahlung gleich zu wählen und die Brechungszahlen sind so unterschiedlich, daß im unteren Prisma für die optische Strahlung Totalreflexion eintritt.

Bei der Ausführungsform in Fig.7 ist parallel zu dem optischen Detektor 21 in einem geringen Abstand vor diesem eine lichtdurchlässige, akustische Resonanzplatte 41′ angeordnet, welche eine optische Reflexions-Minderungsschicht trägt, und welche mit ihrer Schmalseite mit dem akustischen Detektor 40′ schalleitend verbunden ist. Hierbei kann die lichtdurchlässige, akustische Resonanzplatte 41 auch zweischalig ausgeführt sein, wobei dann die eingeschlossene Luft als Resonator mit dem akustischen Schalldetektor 40′ verbunden ist. Mit Hilfe der in akustischer Resonanz schwingenden, lichtdurchlässigen, akustischen Resonanzplatte 41 wird dann die akustische Strahlung direkt an dem damit fest verbundenen akustischen Schalldetektor 40′ gemessen. Die optische Strahlung wird von der Resonanzplatte 41′ durchgelassen und dann am Lichtdetektor 21 gemessen.

Bei der Ausführungsform in Fig.8 ist der Schalldetektor 40′ akustisch leitend unmittelbar mit dem Lichtdetektor 21 verbunden. Hierbei mißt der Lichtdetektor 21 direkt, während der seitlich mit dem Detektor 21 verbundene Schalldetektor 40′ die akustische Strahlung über diesen Lichtdetektor 21 ähnlich wie bei der Ausführungsform der Fig.1, als Körperschall mißt.

Nachstehend wird nun noch eine Maßnahme beschrieben, wie eine Störung des Meßgases beispielsweise mit Hilfe der Ausführungsform nach Fig.1 minimierbar ist. Wie aus Fig.1 zu ersehen, durchströmt ein Meßgas oder Luft das Extinktiometer 100 über die konische Einlaßdüse 11, die Einlaßöffnung 5a, den Brennpunkt 6, die Auslaßöffnung 5b und die konische Auslaßdüse 12; die beiden Düsen 11 und 12 werden jeweils in Strömungsrichtung breiter. Das Meßgas oder die Luft wird hierbei entweder durch die Bewegung des Extinktiometers, das beispielsweise an einem Fahrzeug in Form eines Kraftfahrzeugs oder eines Flugzeugs angebracht ist, oder aber bei einem relativ ruhenden Meßgas durch Ventilation in die Einlaßdüse 11 gedrückt.

Das über die stromlinienförmige, windschlüpfrige Außenform des Ellipsoidspiegels 10 strömende Gas saugt dann durch die sich verengende, bügelförmige Haube 13, welche in Form eines Spaltflügels ausgebildet ist und entsprechend wirkt, das Meßgas aus der Auslaßdüse 12 mit einem Sog an, welcher gleich dem Druckverlust von der Einlaß- zur Auslaßdüse ist. Oder anders ausgedrückt, bei richtiger Bemessung der bügelartigen Haube 13 kompensiert der Sog die Verzögerung und den Druckanstieg aufgrund der Querschnittserweiterung der Ein-und Auslaßdüsen 11, 12 und aufgrund der Reibungsverluste im Inneren des Extinktiometers 100. Damit ist erreicht, daß der Gasdruck im Meßvolumen sich minimal von dem ungestörten Druck des Meßgases unterscheidet, und somit das Aerosol des Meßgases im Meßvolumen, d.h. im Bereich des Brennpunkts 6 nur vernachlässigbar gestört und damit auch nur minimal beeinflußt wird.

Eine Verschmutzung des Extinktiometers 100 durch Meßgas ist im Hinblick auf die dadurch erforderlichen zusätzlichen Wartungsvorgänge und auch deswegen zu vermeiden, um immer genau definierte Verhältnisse im Extinktiometer gewährleisten zu können; eine solche Verschmutzung läßt sich bei dem erfindungsgemäßen Extinktiometer 100 durch die bei ihm vorgesehenen konstruktiven Maßnahmen weitgehenst verhindern.

Ein Gasstrahl, der sich von der Einlaßdüse 11 zur Auslaßdüse 12 bewegt, bildet im Inneren des Volumens des Extinktiometers 100 um sich einen Wirbelring. Das diesen Wirbel bildende Gas vermischt sich nicht mit dem durchströmenden Gasstrahl, welcher den Brennpunktbereich 6 durchquert und damit das Meßvolumen beschickt. Die Energie, welche durch Wandreibung aufgebracht wird, erhält der Wirbel durch den Gasstrahl der ihn erzeugt, aufgrund der Wirkung der am flach zulaufenden Ende 19′ des oberen Gehäuseteils 19 angeordneten bügelartigen Haube 13 zurück.

9

Der Wirbel, der sich von der Einlaßdüse 11 zur Auslaßdüse 12 hin bewegt, erreicht die Wand nicht, da die Bewegung immer langsamer wird, und der Wirbelring sich immer mehr erweitern will, wobei der Querschnitt kleiner und die Winkelgeschwindigkeit größer werden will.

Durch die Leitschaufeln 14, welche im rechten Winkel zur strichpunktiert wiedergegebenen Längsachse des Extinktiometers 100 sich sichelförmig verjüngend an der konischen Innenwand des Gehäuses 18 des Extinktiometers 100 mit einer geringen Neigung zum Brennpunkt 6 und leicht ansteigend in Richtung zur Auslaßdüse 12 angeordnet sind, wird der Wirbel geführt. Der Wirbelring, der sich zur Auslaßdüse 12 hin bewegt, wird somit durch die Leitschaufeln 14 so geführt, daß sich sein Durchmesser verkleinert. Der Wirbelring kann sich somit der Wand nicht nähern, und weder seinen Durchmesser erweiteren, noch seinen Querschnitt verringern. Damit ist erreicht, daß sich der Wirbel stabilisiert, und seine Lebensdauer erhöht wird; obendrein ist eine Vermischung des durchströmenden Meßgases mit dem Wirbel minimiert.

Eine zweite vorteilhafte Eigenschaft des stabilisierten Wirbels liegt darin, daß eine Schallwelle, die sich durch den Wirbelkern hindurchbewegt, von oben her gesehen, zuerst eine Ablenkung in die eine und dann eine gleich große Ablenkung in die andere Richtung erfährt, und somit gewissermaßen den Wirbelring ungestört passiert.

## Patentansprüche

1. Meßeinrichtung in Form eines integrierenden Nephelometers zur Messung des Streu- und Absorptionskoeffizienten der Atmosphäre, mit sendeseitig einem Lichtsender, mit empfangsseitig einem Lichtdetektor (21) für in der Atmosphäre gestreutes Senderlicht und einem Infrarot- oder Schallempfänger (22′) für in der Atmosphäre absorbiertes Senderlicht, und mit Einrichtungen zur Verarbeitung der detektierten Intensität des empfangenen gestreuten und absorbierten Lichtes, wobei vorgesehen ist daß als Lichtquelle des Lichtsenders ein gepulster oder modulierter Laser (1) oder eine gepulste und modulierte Laserdiode mit einer Einrichtung zum Durchstimmen oder Frequenzverdoppeln oder mit einer Einrichtung für diskontinuierlich einstellbare Frequenzintervalle der diskreten Frequenzen verwendet ist, daß ein Ringspiegel (5) mit Einlaßöffnung (5a) und diametral gegenüberliegender Auslaßöffnung (5b) zum Ein- bzw. Ausleiten von zu messendem Aerosol bzw. extingierendem Gas und ein Teil eines rotationssymmetrischen Ellipsoidspiegels (10) so angeordnet sind, daß der erste Brennpunkt (6) des Ellipsoidspiegels (10) im Mittelpunkt der Mittenebene des Ringspiegels (5) und dessen zweiter Brennpunkt inmitten des Lichtdetektors (21) und des diesem zugeordneten Infrarot-oder Schallempfängers (22′) liegt, welche beide (21; 22′) in einem strömungstechnisch gestalteten Raum untergebracht sind, so daß eine vom Lichtsender abgegebene Strahlung ausreichend kleiner Divergenz nach deren Einführen in den Ringspiegel (5) an diesem (5) mehrmals reflektiert wird und sich deren Teilstrahlen (4) konzentrisch um den ersten Brennpunkt (6) des Ellipsoidspiegels (10) herum, über welchen (6) auch das von der Einlaß- (5a) zur Auslaßöffnung (5b) im Ringspiegel (5) strömende, zu messende Aerosol bzw. extingierende Gas geleitet wird, schneiden.

2. Meßeinrichtung nach Anspruch 1, dadurch **gekennzeichnet**, daß der Lichtdetektor (21) schalleitend an dem Schalldetektor (22′) und dieser (22′) über einen Resonanzabsorber (23) am Boden (18′) eines kegelstumpfförmigen Gehäuses (18) befestigt ist, das den strömungstechnisch ausgestalteten Raum umgibt.

3. Meßeinrichtung nach Anspruch 1, dadurch **gekennzeichnet**, daß die Strahlung des Lasers (1) zuerst über eine Lochblende (2a) und einen Strahlteiler (2b) geringer Transmission und hoher Reflexion so aufgeteilt ist, daß der eine Teil der Laserstrahlung von einem in Strahlungsrichtung hinter dem Strahlteiler (2b) angeordneten Detektor (3) erfaßt wird, und der andere Strahlungsteil nach Durchtritt durch eine Lochblende (5c) im Ringspiegel (5), nach n Reflexionen im Ringspiegel (5) und nach Austritt durch eine Austrittsöffnung (5d) im Ringspiegel (5) auf einen mit der Strahlachse einen Winkel einschließenden, optischen Detektor (7), dessen Lochblende kleiner als die Austrittsöffnung (5d) bemessen ist, trifft.

4. Meßeinrichtung nach Anspruch 1, dadurch **gekennzeichnet**, daß eine Innenfläche des kreisförmigen Ringspiegels (5′) symmetrisch zu dessen Mittenfläche eine Krümmung in der Größenordnung des Ringspiegel-Durchmessers aufweist, wobei der Ringspiegel-Durchmesser größer als derjenige des Ellipsoidspiegels (10′) im Bereich einer gedachten Berührungslinie mit dem Ringspiegel (5′) ist, und daß die Kante des Ellipsoidspiegels (10′) oberhalb der gedachten Berührungslinie als Doppel-Lichtfallenblende (17) ausgebildet ist, damit eine diffus vom Ringspiegel (5′) kommende und über den Ellipsoidspiegel (10′) zum Lichtdetektor (21) reflektierte Störstrahlung unterbunden ist.

5. Meßeinrichtung nach Anspruch 1 und 3, dadurch **gekennzeichnet**, daß ein zwischen der Austrittsöffnung (5d) im Ringspiegel (5) und dem optischen Detektor (7) angeordnetes Eichnormal (9) mit einem optischen und akustischen Streukörper als Reflektor mittels eines Hubmagneten (8) hinter die Austrittsöffnung (5d) genau so positionierbar ist, daß die ankommende gepulste oder modulierte Strahlung definiert und mit einer in etwa Lambert'schen Verteilung reflektiert wird, und der Anteil der absorbierten Strahlung, die teilweise in akustische Strahlung umgesetzt ist, entsprechend definiert über die Austrittsöffnung (5d) mit einer in etwa Lambert'schen Energieverteilung auf den gegenüberliegenden Rand des Ellipsoidspiegels (10) geworfen und von dort zu dessen zweiten Brennpunkt reflektiert wird.

6. Meßeinrichtung nach Anspruch 1, dadurch **gekennzeichnet**, daß der obere Teil der Meßeinrichtung (100) entsprechend der Form des Ellipsoidspiegels (10; 10') dadurch windschlüpfrig ausgebildet ist, daß an der Einlaßöffnung (5a) im Ringspiegel (5) außen eine innen schwarze, sich zum Ringspiegel (5) hin konisch erweiternde Einlaßdüse (11) zum Einleiten des Aerosols bzw. des zu extingierenden Gases und an der der Einlaßöffnung (5a) diametral gegenüberliegenden Auslaßöffnung (5b) außen eine ebenfalls innen schwarze, nach außen hin konisch zunehmende Austrittsdüse (12) vorgesehen ist, die von einem dort flach zulaufenden Teil (19') eines Gehäuseoberteils (19) überdeckt ist, und daß zum Ansaugen des durch die Austrittsdüse (12) strömenden Gases nahe dem Ende des flach zulaufenden Gehäuseoberteils (19') eine wie ein Spaltflügel wirkende, bügelartige Haube (13) ausgebildet ist.

7. Meßeinrichtung nach Anspruch 1, dadurch **gekennzeichnet**, daß der strömungstechnisch günstig ausgebildete Raum im Inneren des Gehäuses (18) über dessen Boden (18') durch eine innen stark absorbierende Hohlkugel (15) mit kleinem Adhäsionskoeffizienten abgeschlossen ist, welche (15) eine Ausnehmung (15') zur Aufnahme der am Gehäuseboden (18') angebrachten Detektoren (21; 22') aufweist, und gegenüber der Ausnehmung (15') in einen absorbierenden, geraden Kegelstumpf mit kleinem Adhäsionskoeffizienten übergeht, von welchem nach innen an den Enden sich verjüngende, sichelartige, etwa halbkreisförmige Leitschaufeln (14) vorstehen, die ihre größte Ausladung rechtwinklig zu einer Verbindungslinie zwischen den Düsen (11, 12) aufweisen und zum ersten Brennpunkt (6) hin geneigt ausgerichtet sind, und in Richtung Auslaßdüse (12) wenige Winkelgrade bezüglich der Verbindungsgeraden zwischen den Düsen (11, 12) ansteigen.

8. Meßeinrichtung nach Anspruch 1, dadurch **gekennzeichnet**, daß der Ellipsoidspiegel (10, (10') innen sowie der Ringspiegel (5, 5') und der Strahlteiler (2b) so beheizbar sind, daß ihre Temperatur immmer etwas über der Temperatur der Außenluft liegt, und daß die Detektoren (3, 5, 21, 22') und die Lichtquelle temperaturstabilisiert ausgelegt sind.

9. Meßeinrichtung nach Anspruch 1, dadurch **gekennzeichnet**, daß im Weg eines von dem einen zu dem anderen Brennpunkt des Ellipsoidspiegels (10) reflektierten Schallimpulses vor dem Lichtdetektor (21) ein lichtdurchlässiger, akustischer Resonanzkörper (41) angeordnet ist, welcher vorzugsweise mit einer Flüssigkeit oder einer Dispersion gefüllt ist, und daß etwa senkrecht zur Mittelachse eines vom Schallimpuls gebildeten Schallkegels auf der einen Seite des Resonanzkörpers (41) in der Lichtausbreitungsrichtung hintereinander eine monochromatische Lichtquelle (31), eine Kondensorlinse (32), eine einen optischen Spalt bildende Blende (33) und ein Objektiv (34) und gegenüber auf der anderen Seite des Resonanzkörpers (41) in der Hauptachse des Objektivs (34) eine Lichtfallenblende (38) sowie eine Sammellinse (39) mit einem nachgeordneten Lichtdetektor (40) so vorgesehen sind, daß die Objektiv-Hauptachse und die Sammellinsen-Hauptachse einen sehr kleinen Winkel einschließen, und der Abstand zwischen dem Resonanzkörper (41) und der Lichtfallenblende (38) wesentlich größer ist als der Abstand zwischen dem Resonanzkörper (41) und dem Objektiv (34).

10. Meßeinrichtung nach Anspruch 9, dadurch **gekennzeichnet**, daß zur Messung der Konstanz der Lichtquelle (31) zwischen dem Objektiv (34) und dem Resonanzkörper (41) ein Strahlteiler (35) vorgesehen ist, unter welchem ein optischer Detektor (36) angeordnet ist, und zur Strahlungsbegrenzung eine weitere Lichtfallenblende (37) zugeordnet ist.

11. Meßeinrichtung nach Anspruch 9, dadurch **gekennzeichnet**, daß statt des lichtdurchlässigen, akustischen Resonanzkörpers (41) ein Resonanzgehäuse (44) für Gase oder Flüssigkeiten vorgesehen ist, das sowohl in Richtung zum Objektiv (34) als auch in Richtung zur Sammellinse (39) jeweils mit Seitenfenstern versehen ist, und auf der dem Lichtdetektor (21) abgewandten Seite eine lichtdurchlässige Abdeckplatte (43) aufweist, deren Abstand zum Lichtdetektor (21) feinjustierbar einstellbar ist.

11

12. Meßeinrichtung nach Anspruch 1, dadurch **gekennzeichnet**, daß über dem am Gehäuseboden (18') gehaltenen einen Detektor (21') eine unter 45° zur Strahlungsmittenachse ausgerichtete, optisch-akustische Strahlteilerplatte (45) vorgesehen ist, welche die senkrecht zum einen Detektor (21') einfallende, optische und akustische Strahlung auf den einen Detektor (21') und einen zweiten Detektor (40') aufteilt.

13. Meßeinrichtung nach Anspruch 12, dadurch **gekennzeichnet**, daß die Strahlteilerplatte (45) eine leichte, dünne, verspiegelte Kunststoffplatte mit einem geringen Schallwellenwiderstand ist, und daß der eine Detektor (21') ein Schalldetektor und der zweite Detektor (40') ein Lichtdetektor ist.

14. Meßeinrichtung nach Anspruch 12, dadurch **gekennzeichnet**, daß die Strahlteilerplatte (45) eine entspiegelte, schwere Glasplatte ist, und daß der eine Detektor (21') dann ein Lichtdetektor und der zweite Detektor (40') ein Schalldetektor ist.

15. Meßeinrichtung nach den Ansprüchen 1 und 12, dadurch **gekennzeichnet**, daß als Strahlteiler ein optoakustischer Strahlteilerwürfel aus einem oberen Prisma (46) und aus einem unteren Prisma (47) vorgesehen ist.

16. Meßeinrichtung nach Anspruch 15, dadurch **gekennzeichnet**, daß bei einem etwa gleichen Schallwellenwiderstand der beiden Prismen (46, 47) der Unterschied in den optischen Brechungsindizes so gewählt ist, daß am unteren Prisma (47) Totalreflexion eintritt.

17. Meßeinrichtung nach Anspruch 15, dadurch **gekennzeichnet**, daß bei gleichem optischen Brechungsindex der Unterschied in den akustischen Brechungsindizes so gewählt ist, daß für die akustische Welle am unteren Prisma (47) mit einem akustisch leichten Medium Totalreflexion eintritt.

18. Meßeinrichtung nach Anspruch 1, dadurch **gekennzeichnet**, daß parallel zu und vor dem optischen Detektor (21) in geringem Abstand von diesem eine lichtdurchlässige, akustische Resonanzplatte (41') angeordnet ist, die eine optische Reflexionsminderschicht trägt und deren eine Schmalseite mit dem akustischen Detektor (40') schalleitend verbunden ist.

19. Meßeinrichtung nach Anspruch 18, dadurch **gekennzeichnet**, daß die lichtdurchlässige, akustische Resonanzplatte (41') zweischalig ausgeführt ist, und daß die eingeschlossene Luft als Resonator mit dem akustischen Detektor (40') verbunden ist.

20. Meßeinrichtung nach Anspruch 1, dadurch **gekennzeichnet**, daß am Lichtdetektor (21) seitlich der Schalldetektor (40') schalleitend angebracht ist, welcher (40') rückseitig über einen Resonanzabsorber am Gehäuse (18) befestigt ist.

21. Meßeinrichtung nach Anspruch 1, dadurch **gekennzeichnet**, daß ein Triggersignal des gepulsten Lasers oder der gepulsten Laserdiode (1) über ein elektrisches Zeitverzögerungsglied läuft, dessen Verzögerung der konstanten Laufzeit des Schalls zwischen den beiden Brennpunkten des Ellipsoidspiegels (10) entspricht, und daß ein elektronischer Schalter nur während des Zeitintervalls auf Durchgang schaltet, in dem das Signal des Detektors (22', 40; 40' oder 21') ankommt.

## Claims

1. Measuring instrument in the form of an integrating nephelometer for measurement of the dispersion and absorption coefficient of the atmosphere, having a light emitter on the emitter side, and on the receiver side having a light detector (21) for emitter light scattered in the atmosphere and an infrared or sound receiver (22') for emitter light absorbed in the atmosphere, and having means for processing the detected intensity of the received light scattered and absorbed whereby is provided that a pulsed or modulated laser (1) or a pulsed and modulated laser diode having means for varying the frequency or doubling the frequency or having means for discontinuously settable frequency intervals of the discrete frequencies is used as light source of the light emitter, that an annular mirror (5) having an inlet slit (5a) and a diametrically opposed outlet slit (5b) for the introduction and exiting of aerosol or attenuating gas to be measured respectively and a part of a rotationally symmetrical ellipsoidal mirror (10) are disposed such that a first focal point (6) of the ellipsoidal mirror (10) is located in the center point of the center plane of the annular mirror (5) and a second focal point thereof is located in a substantially middle position of the light detector (21) and the infrared or sound receiver (22′) associated with the light detector, wherein both (21; 22′) are accomodated in a streamlined space, so that radiation of sufficiently small divergence emitted by the light emitter is reflected a multiplicity of times, after introduction thereof into the annular mirror (5), ray segments of light (4) cut concentrically about the first focal point (6) of the ellipsoidal mirror (10), and the aerosol or attenuating gas to be measured are conducted, via the first focal point (6) from the inlet slit (5a) to the outlet slit (5b) of the annular mirror (5).

2. Measuring instrument according to claim 1,
**characterized** in that the light detector (21) is secured in a soundconducting manner on the sound detector (22′), which (22′) is secured by means of a resonance absorber (23) to a bottom surface (18′) of the frustoconical housing, which is surrounding the streamlined space.

3. Measuring instrument according to claim 1,
**characterized** in that the radiation of the laser (1) is divided at first by a perforated plate (2a) and a beam splitter (2b) of low transmission and high reflection, so that the one part of the laser radiation is detected by an optical detector (3) disposed downstream in the radiation direction with respect to the beam splitter (2b) and the other part of radiation, after passing a pin diaphragm (5c) disposed in the annular mirror (5), after n reflections in the annular mirror (5) and after exiting through the outlet slit (5d) in the annular mirror (5), impinges an optical detector (7) which forms an angle with an axis of the beam and wherein the pin diaphragm (5c) of the detector (7) is dimensioned smaller than the outlet slit (5d).

4. Measuring instrument according to claim 1,
**characterized** in that an inside surface of the circular annular mirror (5′) comprises symmetrically to its center face a curvature on the order of magnitude of the diameter of the annular mirror said diameter being greater than the diameter of the ellipsoidal mirror (10′) in the vicinity of an imaginary line of contact with the annular mirror (5′), and that the edge of the ellipsoidal mirror (10′) above the imaginary line of contact is formed as a double light trap (17), so as to suppress interfering radiation arriving diffusely from the annular mirror (5′) and reflected via the ellipsoidal mirror (10′) to the light detector (21).

5. Measuring instrument according to claims 1 and 3,
**characterized** in that a calibration standard (9) disposed between the outlet slit (5d) in the annular mirror (5) and the optical detector (7) and having an optical and acoustical scattering body as a reflector is precisely positionable by means of a solenoid (8) behind the outlet slit (5d) in such a way that the arriving pulsed or modulated radiation is defined and reflected with a distribution approximately in accordance with Lambert's law, and the proportion of the absorbed radiation that is partly converted into acoustical radiation is correspondingly prejected in a defined manner via the outlet slit (5d), with a distribution of energy approximately in accordance with Lambert's law, onto the opposite rim of the ellipsoidal mirror (10) and from there is reflected to the second focal point thereof.

6. Measuring instrument according to claim 1,
**characterized** in that the upper part of the measuring instrument (100) is embodied in streamlined fashion, in accordance with the shape of the ellipsoidal mirror (10, 10′), that prvided on an outside of the inlet slit (5a) in the annular mirror (5), an inlet nozzle (11) that is black on the inside and widens conically toward the annular mirror (5) is provided for introducing the aerosol or the attenuating gas and that an outlet nozzle (12), which is likewise black on the inside and increases conically toward the outside is provided on the outlet slit (5b) diametrically opposite the inlet slit (5a), that an upper part of the housing (19) has a part (19′) which tapers to a flat shape covering the outlet nozzle (12), and that a hoop-like hood (13) functioning like wing-tip slot is embodied near an end of the upper housing part (19′) tapering to a flat shape for the aspiration of the gas flowing throuhg the outlet nozzle (12).

7. Measuring instrument according to claim 1,
**characterized** in that the streamlined space in the interior of the housing (18) is closed via the bottom surface (18′) surface thereof, by means of a hollow sphere (15) being highly absorbent on the inside and having a low coefficient of adhesion, the sphere having a recess (15′) for receiving the detectors (21, 22′) attached to the housing bottom (18′) and merging opposite the recess (15′) with an absorbing, straight truncated cone having a low coefficient of adhesion, from which cone protrude, tapering inward at the ends, crescent-shaped and approximately semicircular baffles (14), which have their greatest projection at right angles to a connecting line between the nozzles (11,12), are oriented inclined toward the first focal point (6), and rise in the direction of the outlet nozzle (12) by a few angular degrees with respect to the

EP 0 336 402 B1

straight connecting line between the nozzles (11, 12).

8. Measuring instrument according to claim 1,
   **characterized** in that the inside of the ellipsoidal mirror (10, 10'), the annular mirror (5, 5') and the beam splitter (2b) are heatable in such a manner that their temperature remains always somewhat above the temperature of the ambient air, and that the detectors (3, 5, 21, 22') and the light source are designed in temperature-stabilized fashion.

9. Measuring instrument according to claim 1,
   **characterized** in that a transparent, accoustical resonance body (41) is disposed upstream of the light detector (21), in the path of a sound pulse reflected from one focal point to the other of the ellipsoidal mirror (10) whereby the resonance body (41) being preferably filled with a liquid or dispersion, that a monochormatic light source (31), a condensor lense (32), a diaphragm (33) forming an optical gap and a lense (34) are disposed in this order on one side of the resonance body (41) in the light propagation direction apporoximately at right angles to the center axis of a sound cone formed by the sound pulse, and that on the other side of the resonance body (41) in the principal axis of the lens (34), a light trap (38) and a collecting lens (39) with a following light detector (40) are provided so that the principal axis of the lens and the principal axis of the collecting lens form a very small angle, and the spacing between the resonance body (41) and the light trap (38) is substantially greater than the spacing between the resonance body (41) and the lens (34).

10. Measuring instrument according to claim 9,
    **characterized** in that for measuring the constancy of the light source (31), a beam splitter (35) is provided between the lens (34) and the resonance body (41), below said beam splitter (35) an optical detector (36) is disposed and a further light trap (37) is associated for radiation limitation.

11. Measuring instrument according to claim 9,
    **characterized** in that instead of a transparent, acoustical resonance body (41), is provided a resonance housing (44) for gases or liquids having side windows both in the direction toward the lens (34) and in the direction toward the collecting lens (39), and having a transparent cover plate (43) on the side remote from the light detector (21), the spacing of which with respect to the light detector (21) being setable in a finely adjustable manner.

12. Measuring instrument according to claim 1,
    **characterized** in that an optical-acoustical beam splitter plate (45) oriented at substantially 45° from the center axis of the radiation is provided above the detector (21') secured on the housing bottom (18'), by means of said beam splitter plate (45) the optical and acoustical radiation vertically incident upon the detector (21') being distributed to the detector (21') and a second detector (40').

13. Measuring instrument according to claim 12,
    **characterized** in that the beam splitter plate (45) is a lightweight, thin, mirrored plastic plate having a low sound wave resistance, and the second detector (21') is a light detector.

14. Measuring instrument according to claim 12,
    **characterized** in that beam splitter plate (45) is a heavy glass plate with a reflection-reducing coating, and the first detector (21') is a light detector and the second detector (40') is a sound detector.

15. Measuring instrument according to claims 1 and 12,
    **characterized** in that an opto-acoustical beam splitter cube with an upper prism (46) and a lower prism (47) is provided as beam splitter.

16. Measuring instrument according to claim 15,
    **characterized** in that if the sound wave resistance of the two prisms (46, 47) is approximately identical, the difference in the optical indexes of refraction is selected such that total reflection occurs at the lower prism (47).

17. Measuring instrument according to claim 15,
    **characterized** in that the optical indexes of refraction being identical, the difference in the acoustical indexes of refraction is selected such that for the acoustical wave at the lower prism (47) having an acoust-

14

ically lightweight medium, total reflection occurs.

18. Measuring instrument according to claim 1,
**characterized** in that parallel to and spaced slightly apart from the optical detector (21) a transparent acoustical resonance plate (41′) has an optical reflection-reducing coating and is connected at one narrow end in a sound-conducting manner to the sound detector (40′).

19. Measuring instrument according to claim 18,
**characterized** in that the transparent acoustical resonance plate (41′) is embodied in two halves, and the enclosed air, as a resonator, is connected to the sound detector (40′).

20. Measuring instrument according to claim 1,
**characterized** in that one side of the light detector (21) is attached in a sound-conducting manner to the sound detector (40′), which (40′) is secured at the back via a resonance absorber, to the housing (18).

21. Measuring instrument according to claim 1,
**characterized** in that a trigger signal of a pulsed laser or pulsed laser diode (1) travels via an electrical time-delay element, the delay of which corresponds to the constant transit time of the sound between the focal points of the ellipsoidal mirror (10), and an electronic switch switches open only during the time interval in which the signal of the detector (22′, 40; 40, or 21′) arrives.


**Revendications**

1. Instrument de mesure sous forme d'un néphélomètre intégrant pour mesurer le coefficient de diffusion et d'absorption de l'atmosphère, muni sur le côté émission d'un émetteur de lumière ainsi que sur le côté réception d'un détecteur de lumière pour la lumière d'émetteur diffusée dans l'atmosphère et d'un récepteur infrarouge ou infrasonore pour la lumière d'émetteur absorbée dans l'atmosphère, et comportant des dispositifs pour le traitement de l'intensité détectée de la lumière diffusée et absorbée reçue, instrument de mesure dans lequel il est prévu qu'en tant que source lumineuse de l'émetteur de lumière, on utilise un laser pulsé ou modulé (1) ou une diode laser pulsée et modulée avec un dispositif pour faire varier ou doubler la fréquence ou avec un dispositif pour les intervalles de fréquence réglables en discontinu pour les fréquences discrètes, dans lequel un miroir annulaire (5) muni d'une ouverture d'admission (5a) et d'une ouverture de sortie (5b) situées de façon diamétralement opposées servant à guider en entrée ou en sortie l'aérosol à mesurer ou le gaz à éteindre et une partie d'un miroir ellipsoïdal (10) symétrique en rotation sont agencés de telle manière que le premier point focal (6) du miroir ellipsoïdal (10) se situe au point central du plan médian du miroir annulaire (5) et son deuxième point focal se situe au centre du détecteur de lumière (21) et du récepteur infrarouge ou infrasonore (22′) affecté à celui-ci, lequel détecteur de lumière et récepteur infrarouge ou infrasonore (21 ; 22′) sont logés dans un espace conçu selon la technique des fluides de sorte qu'un rayonnement émis par l'émetteur de lumière de divergence suffisamment faible après son introduction dans le miroir annulaire (5) est réfléchi plusieurs fois par celui-ci (5) et ses rayons partiels (4) se recoupent de façon concentrique autour du premier point focal (6) du miroir ellipsoïdal (10), par lequel point focal (6) est également mené l'aérosol à mesurer ou gaz à éteindre s'écoulant de l'ouverture d'admission (5a) vers l'ouverture de sortie (5b) dans le miroir annulaire 5.

2. Instrument de mesure selon la revendication 1, caractérisé en ce que le détecteur de lumière (21) est fixé de façon à être conducteur sonore sur le détecteur sonore (22′) et celui-ci (22′) par l'intermédiaire d'un absorbeur de résonance (23) est fixé sur le fond (18′) d'un logement (18) tronconique, qui entoure l'espace conçu selon la technique des fluides.

3. Instrument de mesure selon la revendication 1, caractérisé en ce que le rayonnement du laser (1) est d'abord divisé par l'intermédiaire d'un diaphragme perforé (2a) et d'un diviseur de rayon (2b) de transmission faible et de réflexion élevée de telle manière qu'une partie du rayonnement laser est saisie par un détecteur (3) disposé dans la direction du rayonnement derrière le diviseur de rayon (2b), et l'autre partie de rayonnement après un passage par un diaphragme perforé (5c) dans le miroir circulaire (5), après n réflexions dans le miroir annulaire (5) et après la sortie par une ouverture de sortie (5d) dans le miroir circulaire (5) frappe un détecteur optique (7) avec l'axe de rayonnement incluant un angle, et détecteur optique dont le diaphragme perforé ou sténopé est dimensionné de façon plus petite que l'ouverture de sortie (5d).

4. Instrument de mesure selon la revendication 1, caractérisé en ce qu'une surface intérieure du miroir annulaire circulaire (5′) présente de façon symétrique à sa surface médiane une courbure dans l'ordre de grandeur du diamètre du miroir annulaire, le diamètre du miroir annulaire étant supérieur à celui du miroir ellipsoïdal (10′) dans la région d'une ligne de contact imaginaire avec l'anneau circulaire (5′), et en ce que le bord du miroir ellipsoïdal (10′) au-dessus de la ligne de contact imaginaire est conçu de façon à former un double diaphragme à réflexion de lumière (17) afin de supprimer un rayonnement perturbateur provenant de façon diffuse du miroir annulaire (5′) et réfléchi par le miroir ellipsoïdal (10′) vers le détecteur de lumière (21).

5. Instrument de mesure selon les revendications 1 et 3, caractérisé en ce qu'entre l'ouverture de sortie (5d) dans le miroir annulaire (5) et le détecteur optique (7) il est prévu un étalon de mesure (9) avec un corps de dispersion optique et acoustique en tant que réflecteur au moyen d'un aimant de levage (8) derrière l'orifice de sortie (5d) et pouvant être positionné avec précision de telle sorte que le rayonnement pulsé ou modulé arrivant est défini et réfléchi sensiblement selon une répartition de Lambert et la portion du rayonnement absorbée qui est partiellement convertie en rayonnement acoustique, définie de façon correspondante et projetée par l'orifice de sortie (5d) selon une répartition d'énergie sensiblement conforme à Lambert sur le bord opposé du miroir ellipsoïdal (10) et à partir de celui-ci réfléchi vers son deuxième point focal.

6. Instrument de mesure selon la revendication 1, caractérisé en ce que la partie supérieure de l'instrument de mesure (100) est de façon correspondante à la forme du miroir ellipsoïdal (10, 10′), conçue de façon carénée en ce sens que sur l'ouverture d'admission (5a) dans le miroir annulaire (5) extérieurement une buse d'admission (11) noire à l'intérieur, allant en s'élargissant de façon conique en direction du miroir annulaire (5) est prévue pour l'introduction de l'aérosol ou du gaz à éteindre et sur l'ouverture de sortie (5b) diamétralement opposée à l'ouverture d'admission (5a) est prévue à l'extérieur une buse de sortie (12) également noire à l'intérieur, allant en s'élargissant de façon conique vers l'extérieur, qui est recouverte par une partie plane (19′) d'une partie supérieure de logement (19), et en ce que pour l'aspiration des gaz s'écoulant par la buse de sortie (12) à proximité de l'extrémité de la partie supérieure de logement (19) s'étendant de façon plane est formé un capuchon (13) en forme d'étrier faisant office d'aile à fentes.

7. Instrument de mesure selon la revendication 1, caractérisé en ce que l'espace favorablement conçu selon la technique des fluides à l'intérieur du logement (18) est obturé sur son fond (18′) par une sphère creuse (15) fortement absorbante à l'intérieur avec un faible coefficient d'adhérence, laquelle sphère creuse (15) comporte un évidement (15′) destiné à recevoir les détecteurs (21, 22′) agencés sur le fond du logement (18′), et en regard de l'évidement (15′) se transforme en cône tronqué droit d'absorption à faible coefficient d'adhérence, à partir duquel font saillies vers l'intérieur des pales directrices (14) sensiblement semi-circulaires en forme de croissant se rétrécissant sur les extrémités, dont l'empattement maximum perpendiculaire à une ligne de liaison entre les buses (11,12) est orienté de façon inclinée vers un premier point focal (6), et de façon ascendante de quelques degrés angulaires en direction de la buse de sortie (12) par rapport à la droite de liaison entre les buses (11, 12).

8. Instrument de mesure selon la revendication 1, caractérisé en ce que le miroir ellipsoïdal (10, 10′) à l'intérieur ainsi que le miroir annulaire (5, 5′) et le diviseur de rayon (2b) peuvent être chauffés de telle manière que leur température se situe toujours légèrement au-dessus de la température de l'air extérieur et en ce que les détecteurs (3, 5, 21, 22′) et la source de lumière sont de conception à température stabilisée.

9. Instrument de mesure selon la revendication 1, caractérisé en ce que sur le trajet d'une impulsion sonore réfléchie d'un point focal à l'autre point focal du miroir ellipsoïdal (10) devant le détecteur de lumière (21) est agencé un corps de résonance (41) acoustique perméable à la lumière, qui est de préférence rempli d'un liquide ou d'une dispersion et en ce que de façon sensiblement perpendiculaire à l'axe médian d'une sphère sonore formée par l'impulsion sonore sur l'un des côtés du corps de résonance (41) dans la direction de propagation de la lumière sont prévus en succession une source lumineuse monochromatique (31), une lentille de condenseur (32), un diaphragme (33) formant une fente optique et un objectif (34) et en regard de l'autre côté du corps de résonance (41) dans l'axe principal de l'objectif (34) un diaphragme à réflexion de lumière (38) ainsi qu'une lentille convergente (39) avec un détecteur de lumière (40) disposé en aval de telle sorte que l'axe principal de l'objectif et l'axe principal de la lentille convergente incluent un très petit angle et la distance entre le corps de résonance (41) et le diaphragme à réflexion de lumière (38) est sensiblement supérieure à la distance entre le corps de résonance (41) et l'objectif (34).

**10.** Instrument de mesure selon la revendication 9, caractérisé en ce que pour mesurer la constance de la source lumineuse (31) entre l'objectif (34) et le corps de résonance (41) il est prévu un diviseur de rayon ou lame séparatrice (35), sous laquelle est agencé un détecteur optique (36) et un diaphragme à réflexion de lumière supplémentaire (37) est affecté à la délimitation de rayonnement.

**11.** Instrument de mesure selon la revendication 9, caractérisé en ce qu'à la place du corps de résonance acoustique (41) perméable à la lumière, il est prévu un logement de résonance (44) pour des gaz ou liquides, lequel aussi bien en direction de l'objectif (34) qu'en direction de la lentille convergente (39) est muni chaque fois de fenêtres latérales et présente sur le côté détourné du détecteur de lumière (21) une plaque de recouvrement (43) perméable à la lumière dont la distance par rapport au détecteur de lumière (21) peut être réglée avec précision.

**12.** Instrument de mesure selon la revendication 1, caractérisé en ce que sur l'un des détecteurs (21') fixés sur le fond du logement (18') est prévue une plaque de lame séparatrice opto-acoustique dirigée selon un angle de 45° par rapport à l'axe médian de rayonnement, plaque qui répartit le rayonnement optique et acoustique arrivant perpendiculairement sur un premier détecteur (21') et un second détecteur (40').

**13.** Instrument de mesure selon la revendication 12, caractérisé en ce que la plaque de lame séparatrice (45) consiste en une plaquette légère, mince, réfléchissante ayant une faible résistance aux ondes sonores et en ce que l'un des détecteurs (21') est un détecteur sonore et le second détecteur (40') est un détecteur de lumière.

**14.** Instrument de mesure selon la revendication 12, caractérisé en ce que la plaque de lame séparatrice (45) est une plaque de verre lourde anti-reflets et en ce que l'un des détecteurs (21') est alors un détecteur de lumière et le second détecteur (40') est un détecteur sonore.

**15.** Instrument de mesure selon les revendications 1 et 12, caractérisé en ce qu'en tant que lame séparatrice ou diviseur de rayons, il est prévu un cube diviseur de rayons constitué par un prisme supérieur (45) et par un prisme inférieur (47).

**16.** Instrument de mesure selon la revendication 15, caractérisé en ce que pour une résistance d'ondes sonores sensiblement égale des deux prismes (46, 47), la différence des indices de réfraction optique est choisie de manière que la réflexion totale pénètre sur le prisme inférieur (47).

**17.** Instrument de mesure selon la revendication 15, caractérisé en ce que pour un même indice de réfraction optique, la différence des indices de réfraction acoustique est sélectionnée de manière que pour l'onde acoustique sur le prisme inférieur (47) il se produise une réflexion totale avec un agent acoustiquement léger.

**18.** Instrument de mesure selon la revendication 1, caractérisé en ce que parallèlement à et en amont du détecteur optique (21), à faible distance de celui-ci, est agencée une plaque de résonance acoustique (41') perméable à la lumière qui porte une couche de réflexion optique moindre et dont un petit côté est relié par conduction sonore au détecteur acoustique (40').

**19.** Instrument de mesure selon la revendication 18, caractérisé en ce que la plaque de résonance acoustique (41'), perméable à la lumière est à double paroi et en ce que l'air inclu est relié comme résonateur au détecteur acoustique (40').

**20.** Dispositif de mesure selon la revendication 1, caractérisé en ce que le détecteur sonore (40') est disposé par conduction sonore latéralement au détecteur de lumière (21), lequel détecteur sonore (40') est fixé sur l'arrière par l'intermédiaire d'un absorbeur de résonance au logement (18).

**21.** Instrument de mesure selon la revendication 1, caractérisé en ce qu'un signal de déclenchement du laser pulsé ou de la diode laser pulsée (1) passe par un élément de temporisation électrique dont la temporisation correspond au temps de passage constant du son entre les deux points focaux du miroir ellipsoïdal (10), et en ce qu'un contacteur électronique ne commute que pendant l'intervalle de temps au cours duquel parvient le signal du détecteur (22', 40, 40' ou 21').

EP 0 336 402 B1

Fig. 1

Fig. 2

Fig. 3

Fig. 4

Fig. 5

45

40'

21'

Fig. 6

46

40'

47

21'

Fig. 7

41'

40'

21

Fig. 8

40'

21